# EUROPEAN PATENT SPECIFICATION

(11) **EP 0 957 417 B1**
(45) Date of publication and mention of the grant of the patent: **13.10.2004**
(21) Application number: 99303581.5
(22) Date of filing: 07.05.1999
(51) Int. Cl.: G05B 19/401

(54) **Work form-measuring method and device, and coordinate-measuring machine**
Werkstückformmessungsverfahren und -vorrichtung, und Koördinatenmessmaschine
Procédé et dispositif pour mesurer la forme d'un objet et machine de mesure de coordonnées

(30) Priority: 11.05.1998 JP 12727898
(43) Date of publication of application: 17.11.1999
(73) Proprietor: Mitutoyo Corporation, Kanagawa 213-0012 (JP); Mori Seiki Co., Ltd., Yamatokoriyama-shi, Nara 639-1160 (JP)
(72) Inventor: Yoda, Yukiji, Mitutoyo Corporation, Kanagawa 213-0012 (JP); Matsumiya, Sadayuki, Mitutoyo Corporation, Kanagawa 213-0012 (JP); Kobi, Akihiro, Mori Seiki Co., Ltd., Yamatokoriyama-shi, Nara 639-1160 (JP)
(74) Representative: Skone James, Robert Edmund

(56) References cited:
- EP-A- 0 496 968
- EP-A- 0 665 481
- DE-A- 3 417 741
- GB-A- 2 108 715
- US-A- 3 839 800
- US-A- 4 473 883
- US-A- 5 112 131

## Description

The present invention relates to a work form-measuring method and device, and a coordinate-measuring machine, in particular to a work form-measuring method and device, and a coordinate-measuring machine which are capable of measuring the forms and dimensions of a work machined by a machine tool such as a machining center, immediately after the machining, by a coordinate-measuring machine such as a three-dimensional coordinate measuring machine, to shorten the production line tact including the measurement, and then to carry out the feedback of the measured data promptly.

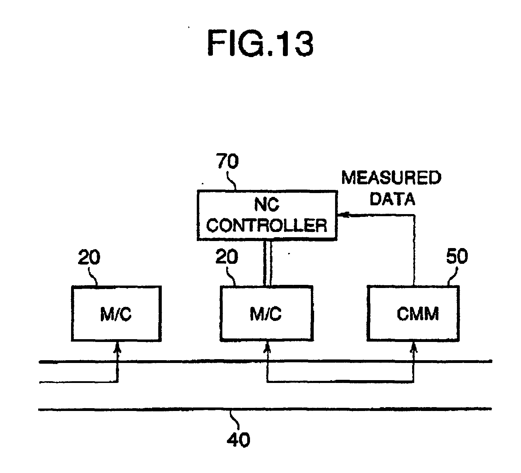

Conventionally, as shown in Fig. 13 for example, a machining line comprises a plurality of machining centers (hereinafter also referred to as "the M/C") 20, and a conveying loader 40 to which the machining centers 20 are connected, and further includes three-dimensional coordinate-measuring machines (hereinafter also referred to as "the CMM") 50. The three-dimensional coordinate-measuring machine 50 is arranged in the same row as the machining center 20 as one station of the machining line.

Therefore, the work machined by one of the machining centers 20 is subjected to the measurement carried out by the three-dimensional coordinate-measuring machine 50 at the next step, according to the following processes:
i) machining the work by the machining center 20.
ii) conveying the work to the three-dimensional coordinate-measuring machine 50 by the conveying loader 40.
iii) measuring the work by the three-dimensional coordinate-measuring machine 50 and then to feed back the measured data to the machining center 20 on occasion demands.

Of the processes i) to iii), the conveying process ii) by the conveying loader 40 includes, in detail, the process of taking out, conveying, and taking in the work, which requires a lot of time. This results in an obstacle to shorten the whole line tact, in spite of the acceleration of each of the machining process i) and the measuring process iii). US4473883 describes such known apparatus in which a conveying system transfers pallets between stations for respective workpiece machining and measuring operations. DE3417741A1 also describes a measuring device and GB2108715A describes a machining centre.

The present invention has been made in order to solve the above conventional problems. It is therefore an object of the present invention to provide a work form-measuring method and device which are capable of shortening the production line tact including the measurement, and then promptly carrying out the feedback of the measured data from a coordinate-measuring machine to a machining tool.

To attain the above-mentioned object, the present invention provides a workpiece-measuring method comprising the steps of :
placing a workpiece in a waiting position on a changer;
moving the changer to place the workpiece at or adjacent to a machining position;
machining the workpiece using a machining tool;
moving the changer to return the workpiece to the waiting position;
thereafter bringing a probe of a coordinate-measuring machine close to the workpiece in the waiting position; and
measuring the forms and dimensions of the workpiece in the waiting position.

Preferably, the direction of the probe of the coordinate-measuring machine moving to the work is the same as that of a tool of the machining tool moving to the work, thereby enabling the work to be subjected to the measurement in the same condition (posture, supporting method, clamping method and on) as the machining tool, which provides a highly accurate measurement.

More preferably, the direction of the tool of the machining tool moving to the work and that of the probe of the coordinate-measuring machine moving to the work both are horizontal, which facilitates the arrangement of the machining tool and the coordinate-measuring machine.

Also preferably, the coordinate-measuring machine is capable of taking refuge to such a position as that the coordinate-measuring machine does not prevent the work from moving, which provides a highly accurate measurement without excessively increasing the respective lengths of the spindle and the probe of the coordinate-measuring machine, and without increasing the coordinate-measuring machine in size.

To attain the above-mentioned object, the present invention also provides a workpiece-measuring apparatus comprising:
a changer, adapted to move a workpiece from a waiting position to a position that is at or adjacent to a machining position, and back to the waiting position; and a coordinate-measuring machine for bringing a probe thereof close to the workpiece at the waiting position to thereby measure the forms and dimensions of the workpiece after machining of the workpiece with a machining tool when the workpiece is in the machining position.

Preferably, the work-measuring apparatus further comprises refuge means for causing the coordinate-measuring machine to take refuge to such a position as that the coordinate-measuring machine does not prevent the work from moving.

More preferably, the refuge means is adapted to cause the coordinate-measuring machine to take refuge in a linear motion manner, which requires only simple construction to take refuge.

Alternatively, the refuge means is adapted to cause the coordinate-measuring machine to take refuge in a rotational motion manner, which requires only small occupation space to take refuge.

Further, the present invention provides a coordinate-measuring machine disposed in the vicinity of a machining tool for getting a probe thereof close to a work, having machined by the machining tool, placed on a waiting position, to thereby measure the forms and dimensions of the work, which causes the coordinate-measuring machine to be easily installed into machining line.

Preferably, the machining tool and the coordinate-measuring machine are adapted to mutually exchange a measurement enabling signal and a measurement completion signal, both of which are related to the movement of the work by the changer, which causes the machining tool and the coordinate-measuring machine to be surely operated.

More preferably, the coordinate-measuring machine leaves a refuge position after having received a signal of informing a change movement completion, from the machining tool, and the changer starts moving the work after having received a signal of informing a coordinate-measuring machine refuge completion.

The work form-measuring apparatus preferably further comprises rotating means for rotating the work which is placed on a measuring position, which causes the work to be measured in all or multi-side faces.

According to the present invention, the forms and dimensions of the work, having been machined by the machining tool, can be immediately after the machining, thereby resulting in the shortage of the production line tact including the measurement, and the acceleration of the feed back of the measured data from the coordinate-measuring machine to the machining tool. Also, the coordinate-measuring machine, which is conventionally required to be used at a sampling inspection process or a final process, can be used at an intermediate process between the machining tools, which enables the measurement in the line to be ideally carried out, and then the machining and the measurement can be carried out in parallel, thereby enabling a true error of the machining tool to be extracted, which enables an optimum feedback value to be obtained.

These and other novel features and advantages of the present invention are described in or will become apparent from the following detailed description of preferred embodiments.

Moreover, as relevant to the present invention, there is described in US Patent No. 3,800,422 that a three-dimensional coordinate-measuring machine is adapted to rotate a spindle together with a vertical shaft, and further in US Patent No. 3,823,482 that only a probe of a coordinate-measuring machine is rotatable. However, both of US Patents do not take account of incorporating the three-dimensional coordinate-measuring machine into a machining tool.

The preferred embodiments will be described with reference to the drawings, wherein like embodiments have been noted throughout the figures with like reference numerals and wherein:
Fig. 1 is a front view of a three-dimensional coordinate-measuring machine according to a first embodiment of the present invention, including a machining center, which is useful in explaining their arrangement:
Fig. 2 is a plan view of the same;
Fig. 3 is a perspective view of the same;
Fig. 4 is a schematic perspective view of the machining center;
Fig. 5 is a schematic perspective view of an auto pallet changer disposed on the machining center;
Fig. 6 is a block diagram showing the system construction of the first embodiment;
Fig. 7 is a flow chart showing measurement procedures in the first embodiment;
Fig. 8 is a plan view of the auto pallet changer in the first embodiment, which is useful in explain its operation;
Fig. 9 is a plan view of a second embodiment of the present invention;
Fig. 10 is a plan view of the same;
Fig. 11 is a front view of a third embodiment of the present invention;
Fig. 12 is a plan view of the same; and
Fig. 13 is a schematic arrangement of one example of a conventional machining line having a three-dimensional coordinate-measuring machine.

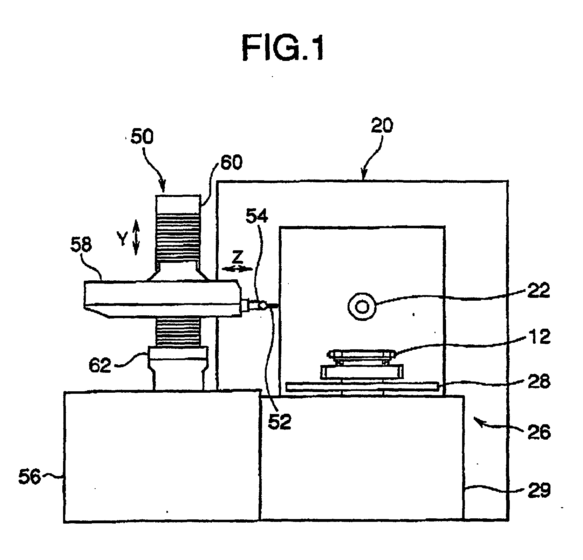

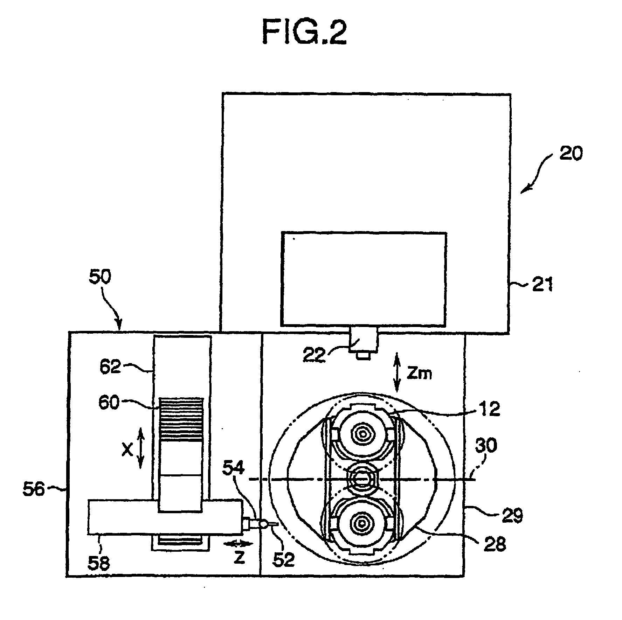

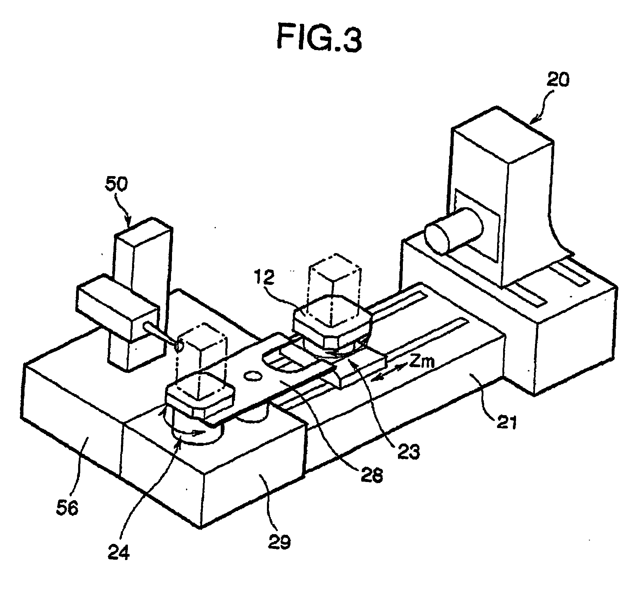

A first embodiment of the invention will be described hereinbelow with reference to Fig. 1 of a front view, Fig. 2 of a plan view, and Fig. 3 of a perspective view.

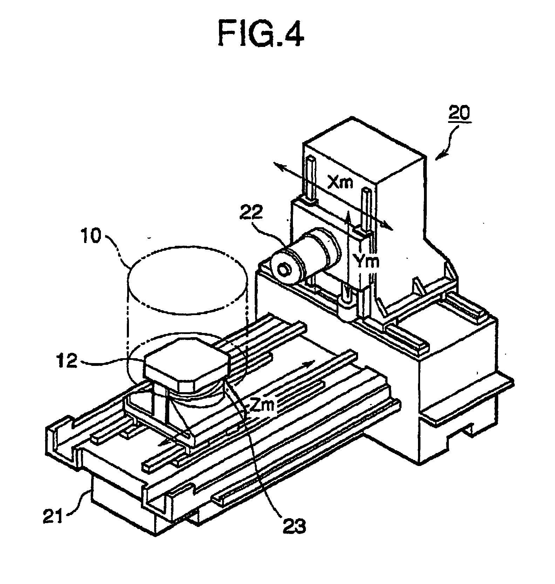

Referring to Figs. 1 to 3, in the vicinity of a machining center, such as a horizontal type machining center (M/C) 20 shown in Fig. 4 for example, is disposed a horizontal type three-dimensional coordinate-measuring machine (CMM) 50. The machining center 20 has a horizontal main spindle 22, and the three-dimensional coordinate-measuring machine 50 has a horizontally movable spindle 54 to which a probe 52 is attached. A work 10 (See Fig. 4) is moved to a waiting position after it has been machined by the machining center 20, where the form of the work 10 is measured by the probe 52 of the CMM getting close to the work 10.

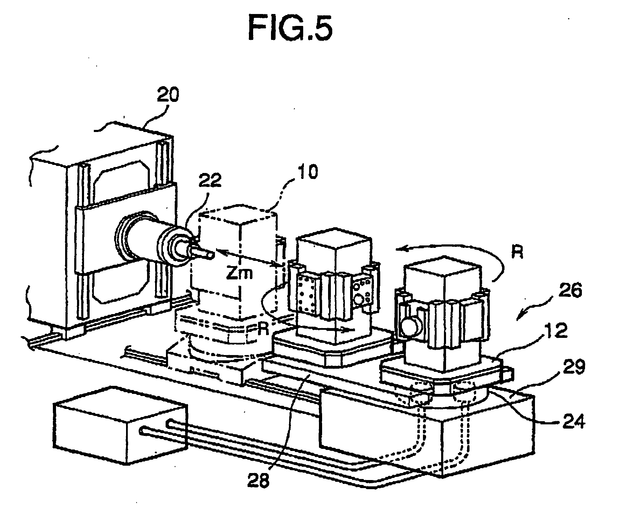

In the drawings, reference numeral 21 designates a base of the M/C 20, 22 a main spindle to which is attached a cutting tool, such as a drill, a face mill, and a tap, for machining the work 10 moving in a Z-axis direction Zm of the M/C 20, 23 a machining index (rotation) mechanism for rotating the work 10 by a predetermined angle at the machining position, 26 a two-position rotational type auto pallet changer (hereinafter also referred to as "the APC"), and 29 a base of the APC 26. The APC 26 includes a plate 28 for rotating the work 10, which is taken in from and out to a conveying loader (not shown) and placed on a pallet 12, as shown by the arrow R in Fig. 5, to move the work 10 between the waiting position of a lower side in Fig. 2, and a machining position of an upper side in Fig. 2.

A partition plate 30 is, on occasion demands, uprightly disposed between the machining position and the waiting position, for preventing chips and oil occurring during the machining from being splashed.

Reference numeral 54 designates a spindle of the CMM 50, 56 a base of the CMM 50, 58 a Z-axis cover covering a Z-axis direction moving mechanism for moving the spindle 54 in a horizontal Z-axis direction, 60 a Y-axis cover for covering a Y-axis direction moving mechanism for moving the Z-axis direction moving mechanism 58 in a vertical Y-axis direction, and 62 an X-axis cover for covering an X-axis direction moving mechanism for moving the Y-axis direction moving mechanism 60 in a horizontal X-axis direction perpendicular to drawing sheet of Fig. 1 (See Fig. 2).

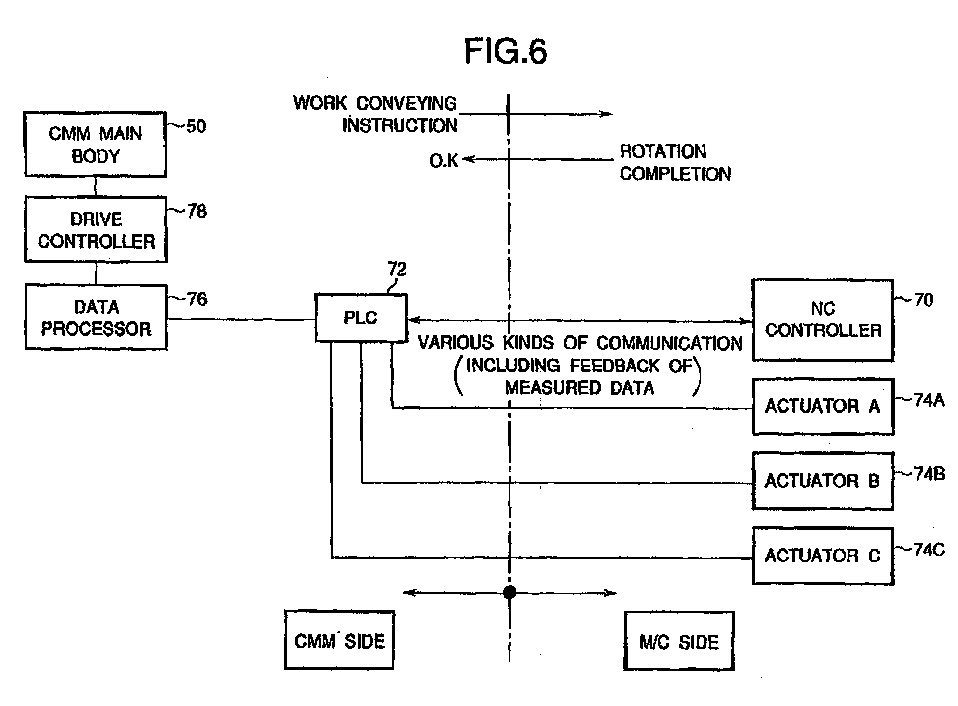

There is shown in Fig. 6 a system of the first embodiment in which various kinds of communication including the feedback of the measured data are carried out between a NC controller 70 on a side of the M/C 20 and a programmable controller (hereinafter also referred to as "the PLC") 72 on a side of the CMM 50. The instruction of the PLC 72 causes a drive controller 78 and a data processor 76 to transmit the data mutually, in which the drive controller 78 controls actuators 74A, 74B, 74C such as jig clamps, and a main body of the CMM 50.

For example, when the NC controller 70 transmits an APC rotation completion-informing instruction to the CMM 50, the CMM 50 performs the measurement. In concrete terms, whenever the measurement of one side face of the work 10 is completed, the work 10 is rotated (turns in its axis) by an optional angle, e.g. 90° by the measuring index mechanism 24, and then the next side face of the work 10 is measured. In this manner, repeating the 90°, for example, -rotation and the measurement causes all the side faces of the work 10 to be measured. After the completion of the measurement, the CMM 50 transmits a work (or pallet)-conveying instruction to the NC controller 70, and the work, having been measured, is taken out to the conveying loader 40, and then the next work 10 is taken in from the conveying loader 40 to the waiting position.

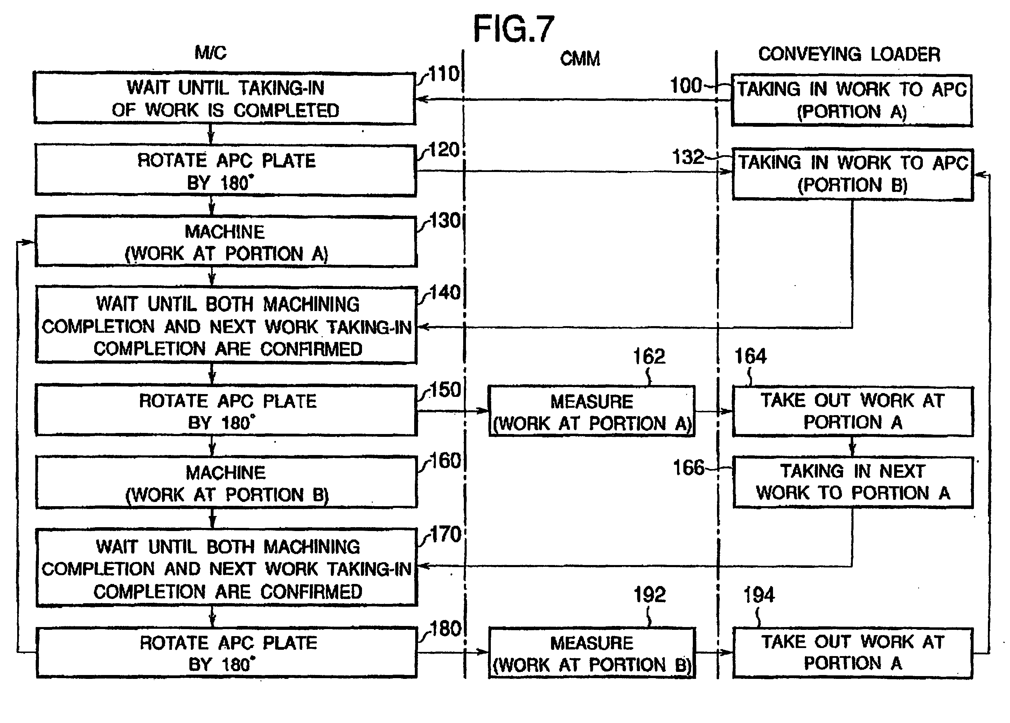

Next, procedures in measurement will be described with reference to Fig. 7.

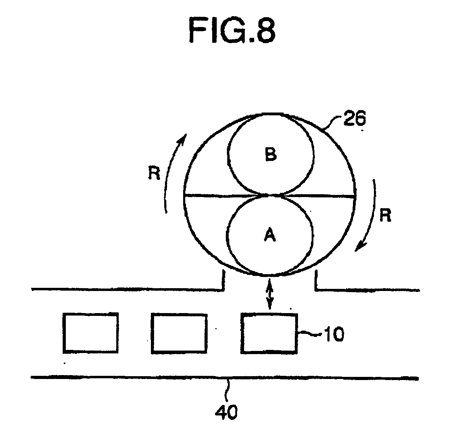

In Fig. 7, at a step 100, the work 10 to be next machined, as shown in Fig. 8, on the M/C 20 is taken in to a portion A of plate 28 of the APC 26 which is located on a side of the conveying loader 40 at this point of time. Next, the plate 28 of the APC 26 is rotated by 180° as shown by the arrow R at a step 120, and the work 10 placed on the portion A, which is turned to be located on the machining position (i.e., on a side of the M/C 20), is machined by the M/C 20 at a step 130. In parallel with this machining, the next work 10 is taken in from the conveying loader 40 to a portion B, which is located on the waiting position (i.e., on a side of the conveying loader 40), during the machining at a step 132.

At a step 140, waiting condition continues until both the machining completion and the next work taking-in completion are confirmed. Then, when the confirmation is made, the plate 28 of the APC 26 is rotated by 180° at a step 150. The rotation of the plate 28 of the APC 26 causes the work 10 to be moved to the machining position, where the work 10 is machined by the M/C 20 at a step 160. On the other hand, the CMM 50 measures all the side faces of the work 10 moved to the portion A which returns to the waiting position after the machining completion, while repeating the 90°-rotation by the measuring index mechanism 24 and the measurement, at a step 162. The work 10, having been machined, is taken out to the conveying loader 40 at a step 164, and then the next work 10 is taken in to the waiting position from the conveying loader 40 at a step 166.

At a step 170, waiting condition continues until both the machining completion and the next work taking-in completion are confirmed. Then, the plate 28 of the APC 26 is rotated again by 180° at a step 180, followed by returning to the step 130, where work 10 placed on the portion A, which is turned to be the machining position, is machined by the M/C 20. On the other hand, the CMM 50 measures all the side faces of the work 10 moved to the portion B which returns to the waiting position after the machining completion by rotation of the APC at a step 180, at a step 192. The work 10, having been measured on all side faces, is taken out to the conveying loader 40 at a step 194, followed by returning to the step 132, where the next work is taken in to the waiting position of the APC 26 from the conveying loader 40.

Thereafter, the above steps 130 to 194 are repeated.

In this way, the work 10 can be measured at a measuring area (waiting position) simultaneously during the other work 10 is machined at a machining area (machining position) of the M/C 20 having the APC 26. This causes the respective performances of the M/C 20 and the CMM 50 to be exhibited, with increased machining speed. Moreover, taking account of the APC 26 rotating, the CMM 50 is disposed at a safety position at which the CMM 50 do not interfere with the APC 26, with the Z-axis direction moving range enlarged. This causes, however, the CMM 50 and the APC 26 to be away from each other to elongate the Z-axis, with the deflection of the spindle, etc., which provides a disadvantage as to accuracy.

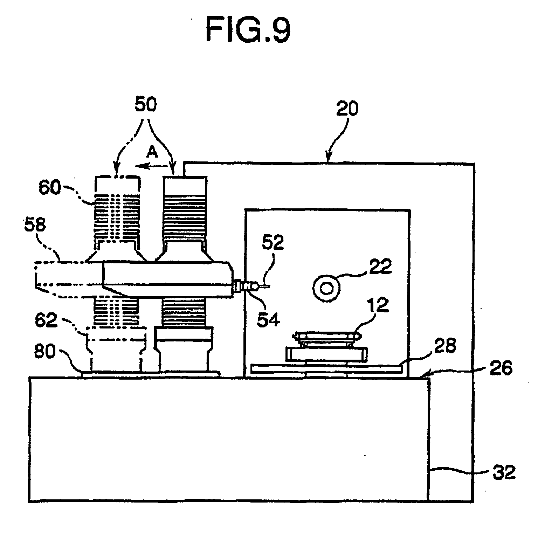

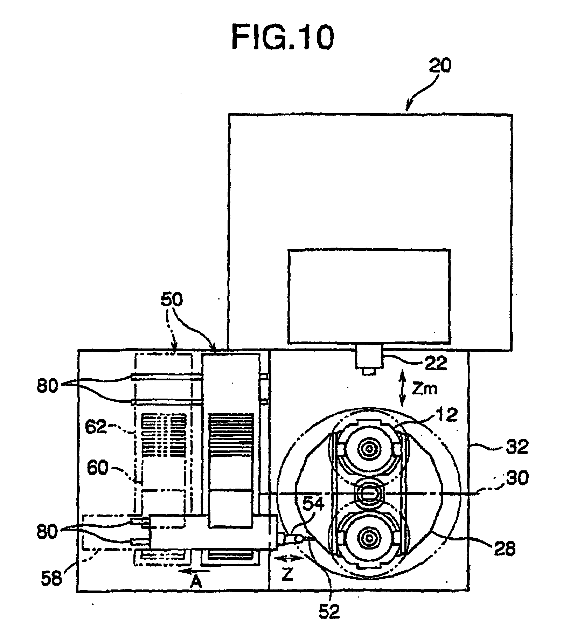

Therefore, in a second embodiment of the invention, as shown in Fig. 9 of a front view and Fig. 10 of a plan view, there is disposed rails 80 on a base 32 of the CMM 50 which is common to the M/C 20, enabling a main body of the CMM to linearly take refuge to a refuge position.

According to the second embodiment, the CMM 50, which is heavy, can take refuge safely.

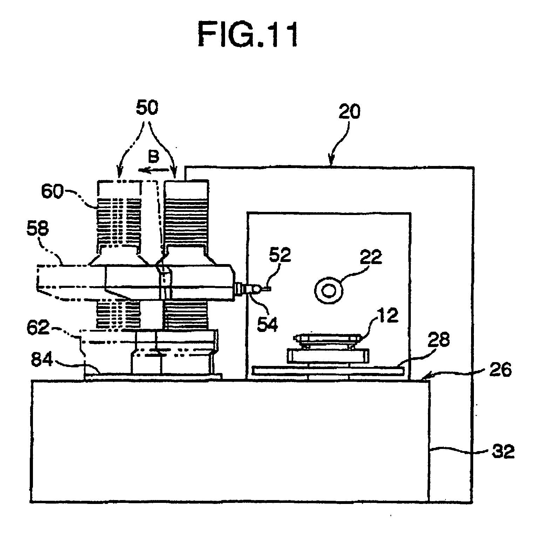

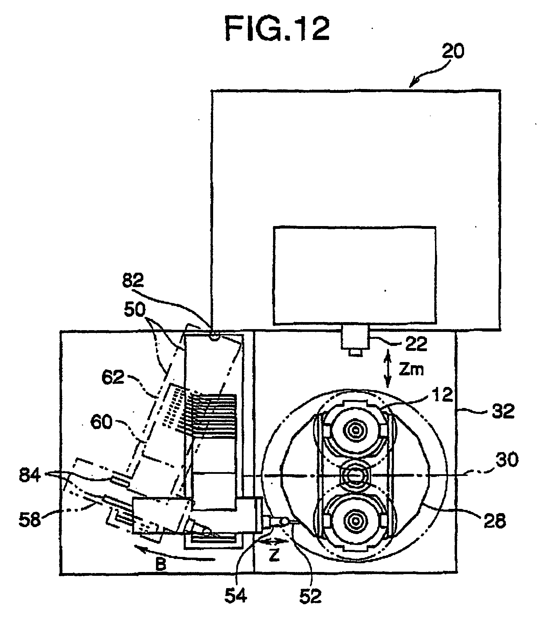

Moreover, in the second embodiment, the whole CMM 50 is adapted to be moved, making the driving mechanism large-scaled, which makes the large occupation space large. Therefore, a third embodiment of the present invention is, as shown in Fig. 11 of a front view and Fig. 12 of a plan view, adapted to take refuge by rotating the main body of the CMM 50 on rails 84 around a vertical axis 82 on the side of the M/C 20, as shown by the arrow B.

This embodiment realizes a safe refuge movement and requires only a small occupation space compared with the second embodiment.

In the above embodiments, the moving direction (Zm direction) of the work 10 relative to the cutter during cutting and the moving direction (Z-axis direction) of the prove 52 both are horizontal, thereby providing a high accuracy measurement, and an easy arrangement. Moreover, the machining center and the three-dimensional coordinate-measuring machine each is not limited to a horizontal type.

Moreover, in the above embodiment, the APC 26 is of a two-position rotational type; however, the invention can also be employed for a machining tool, other than a machining center, comprising a three-position rotational type APC in which a machining position and two waiting positions are arranged at equi-angular position and the waiting positions are exchangeable by another method other than the rotational method.

Furthermore, in the above embodiments, the invention is employed for the three-dimensional coordinate-measuring machine; however, it is apparent that the application of the invention is not limited to these embodiments, and that the invention can be similarly applied to a coordinate-measuring machine, which measures a three-dimensional shape of the work using the movement of the work with both an X-axis and a Y-axis fixed, and a two-dimensional coordinate-measuring machine which measures only a two-dimensional sectional shape of the work at a predetermined level.

## Claims

1. A workpiece measuring method comprising the steps of:
placing a workpiece (10) in a waiting position on a changer (26);
moving the changer (26) to place the workpiece at or adjacent to a machining position;
machining the workpiece (10) using a machining tool (20);
moving the changer (26) to return the workpiece (10) to the waiting position;
thereafter bringing a probe (52) of a coordinate-measuring machine (50) close to the workpiece (10) in the waiting position; and
measuring the forms and dimensions of the workpiece (10) in the waiting position.

2. A workpiece measuring method as claimed in claim 1, wherein the direction of said probe (52) of said coordinate-measuring machine (50) moving to said workpiece (10) is the same as that of a tool (22) of said machining tool (20) moving to said workpiece (10).

3. A workpiece measuring method as claimed in claim 2, wherein said direction of said tool (22) of said machining tool (20) moving to said workpiece (10) and that of said probe (52) of said coordinate-measuring machine (50) moving to said workpiece (10) both are horizontal.

4. A workpiece measuring method as claimed in any of claims 1 to 3, wherein said coordinate-measuring machine (50) is capable of taking refuge to such a position as that said coordinate-measuring machine does not prevent said workpiece (10) from moving.

5. A workpiece measuring apparatus comprising:
a changer (26) , adapted to move a workpiece (10) from a waiting position to a position that is at or adjacent to a machining position, and back to the waiting position; and a coordinate-measuring machine (50) for bringing a probe (52) thereof close to the workpiece (10) at the waiting position to thereby measure the forms and dimensions of the workpiece (20) after machining of the workpiece (10) with a machining tool when the workpiece is in the machining position.

6. A workpiece measuring apparatus as claimed in claim 5, further comprising refuge means (80, 82, 84) for causing said coordinate-measuring machine (50) to take refuge to such a position as that said coordinate-measuring machine does not prevent said workpiece (10) from moving.

7. A workpiece measuring apparatus as claimed in claim 6, wherein said refuge means (80) is adapted to cause said coordinate-measuring machine (50) to take refuge in a linear motion manner.

8. A workpiece measuring apparatus as claimed in claim 6, wherein said refuge means (82, 84) is adapted to cause said coordinate-measuring machine (50) to take refuge in a rotational motion manner.

9. A workpiece measuring apparatus as claimed in any of claims 5 to 8, wherein said machining tool (20) and said coordinate-measuring machine (50) are adapted to mutually exchange a measurement enabling signal and a measurement completion signal, both of which are related to the movement of said workpiece (10) by said changer (26).

10. A workpiece measuring apparatus as claimed in claim 9, wherein said coordinate-measuring machine (50) leaves a refuge position after having received a signal of informing a change movement completion, from said machining tool (20), and said changer (26) starts moving said workpiece (10) after having received a signal of informing a coordinate-measuring machine refuge completion.

11. A workpiece measuring apparatus as claimed in any of claims 5 to 10, further comprising rotating means (24) for rotating the workpiece (10) which is placed on a measuring position.

## Patentansprüche

1. Werkstückmeßverfahren, bei dem folgende Schritte ausgeführt werden:
es wird ein Werkstück (10) in einer Warteposition auf einem Wechsler (26) angeordnet;
der Wechsler (26) wird bewegt, um das Werkstück in oder in der Nähe einer Bearbeitungsposition anzuordnen;
das Werkstück (10) wird mittels einer Werkzeugmaschine (20) bearbeitet;
der Wechsler (26) wird bewegt, um das Werkstück (10) in die Warteposition zurückzubringen;
danach wird ein Taststift (52) einer Koordinatenmeßmaschine (50) dicht an das Werkstück (10) in der Warteposition gebracht und dann
werden die Formen und Abmessungen des Werkstücks (10) in der Warteposition gemessen.

2. Werkstückmeßverfahren nach Anspruch 1, bei dem die Richtung des Taststifts (52) der Koordinatenmeßmaschine (50), der sich zum Werkstück (10) hin bewegt, die gleiche wie die eines Werkzeugs (22) der Werkzeugmaschine (20) ist, das sich zum Werkstück (10) hin bewegt.

3. Werkstückmeßverfahren nach Anspruch 2, bei dem die Richtung des Werkzeugs (22) der Werkzeugmaschine (20), das sich zum Werkstück (10) hin bewegt, und die des Taststifts (52) der Koordinatenmeßmaschine (50), der sich zum Werkstück (10) hin bewegt, beide horizontal sind.

4. Werkstückmeßverfahren nach einem der Ansprüche 1 bis 3, bei dem die Koordinatenmeßmaschine (50) in der Lage ist, in eine solche Position auszuweichen, in der die Koordinatenmeßmaschine das Werkstück (10) nicht an einer Bewegung hindert.

5. Werkstückmeßvorrichtung, die aufweist:
einen Wechsler (26), durch den ein Werkstück (10) aus einer Warteposition in eine Position, die sich in oder nahe bei einer Bearbeitungsposition befindet, und zurück in die Warteposition bewegbar ist; und eine Koordinatenmeßmaschine (50) zum Verschieben eines Taststifts (52) der Koordinatenmeßmaschine (50) bis dicht an das Werkstück (10) in der Warteposition , um dadurch die Form und Abmessungen des Werkstücks (10) nach der Bearbeitung des Werkstücks (10) mit einer Werkzeugmaschine zu messen, wenn sich das Werkstück in der Bearbeitungsposition befindet.

6. Werkstückmeßvorrichtung nach Anspruch 5, die ferner ein Ausweichmittel (80, 82, 84) aufweist, durch das bewirkt werden kann, daß die Koordinatenmeßmaschine (50) in eine solche Position ausweicht, in der die Koordinatenmeßmaschine das Werkstück (10) nicht an einer Bewegung hindert.

7. Werkstückmeßvorrichtung nach Anspruch 6, bei der das Ausweichmittel (80) in der Lage ist zu bewirken, daß die Koordinatenmeßmaschine (50) in Form einer linearen Bewegung ausweicht.

8. Werkstückmeßvorrichtung nach Anspruch 6, bei der das Ausweichmittel (82, 84) in der Lage ist zu bewirken, daß die Koordinatenmeßmaschine (50) in Form einer Drehbewegung ausweicht.

9. Werkstückmeßvorrichtung nach einem der Ansprüche 5 bis 8, bei dem die Werkzeugmaschine (20) und die Koordinatenmeßmaschine (50) so ausgebildet sind, daß sie gegenseitig ein Meßfreigabesignal und ein Meßabschlußsignal austauschen, die sich beide auf die Bewegung des Werkstücks (10) durch den Wechsler (26) beziehen.

10. Werkstückmeßvorrichtung nach Anspruch 9, bei der die Koordinatenmeßmaschine (50) eine Ausweichposition verläßt, nachdem sie ein Signal, das einen Wechselbewegungsabschluß signalisiert, von der Werkzeugmaschine (20) erhalten hat, und daß der Wechsler (26) das Bewegen des Werkstücks (10) beginnt, nachdem es ein Signal erhalten hat, das einen Abschluß der Ausweichbewegung der Koordinatenmeßmaschine signalisiert.

11. Werkstückmeßvorrichtung nach einem der Ansprüche 5 bis 10, die ferner ein Mittel (24) zum Drehen des Werkstücks (10) aufweist, das in eine Meßposition gebracht worden ist.

## Revendications

1. Procédé de mesure d'une pièce comprenant les étapes consistant à :
placer une pièce (10) dans une position d'attente sur un changeur (26) ;
déplacer le changeur (26) pour placer la pièce dans ou au voisinage d'une position d'usinage ;
usiner la pièce (10) en utilisant une machine d'usinage (20) ;
déplacer le changeur (26) pour remettre la pièce (10) dans la position d'attente ;
amener ensuite une sonde (52) d'une machine de mesure de coordonnées (50) à proximité de la pièce (10) dans la position d'attente ; et,
mesurer les formes et les dimensions de la pièce (10) dans la position d'attente.

2. Procédé de mesure d'une pièce selon la revendication 1, dans lequel la direction de ladite sonde (52) de ladite machine de mesure de coordonnées (50) se déplaçant vers ladite pièce (10) est la même que celle d'un outil (22) de ladite machine d'usinage (20) se déplaçant vers ladite pièce (10).

3. Procédé de mesure d'une pièce selon la revendication 2, dans lequel ladite direction dudit outil (22) de ladite machine d'usinage (20) se déplaçant vers ladite pièce (10) et celle de ladite sonde (52) de ladite machine de mesure de coordonnées (50) se déplaçant vers ladite pièce (10) sont toutes les deux horizontales.

4. Procédé de mesure d'une pièce selon l'une quelconque des revendications 1 à 3, dans lequel ladite machine de mesure de coordonnées (50) est capable de se retirer dans une position telle que ladite machine de mesure de coordonnées n'empêche pas ladite pièce (10) de se déplacer.

5. Appareil de mesure d'une pièce comprenant :
- un changeur (26), adapté pour déplacer une pièce (10) d'une position d'attente à une position qui est une position d'usinage ou qui est à proximité de celle-ci, et pour la remettre dans la position d'attente ;
et,
- une machine de mesure de coordonnées (50) pour amener une sonde (52) de celle-ci à proximité de la pièce (10) dans la position d'attente pour mesurer ainsi les formes et les dimensions de la pièce (20) après l'usinage de la pièce (10) avec une machine d'usinage lorsque la pièce de travail est dans la position d'usinage.

6. Appareil de mesure d'une pièce selon la revendication 5, comprenant en outre des moyens de retrait (80, 82, 84) destinés à induire un retrait de ladite machine de mesure de coordonnées (50) dans une position telle que la machine de mesure de coordonnées n'empêche pas ladite pièce (10) de se déplacer.

7. Appareil de mesure d'une pièce selon la revendication 6, dans lequel ledit moyen de retrait (80) est adapté pour induire un retrait de ladite machine de mesure de coordonnées (50) selon un mouvement linéaire.

8. Appareil de mesure d'une pièce selon la revendication 6, dans lequel ledit moyen de retrait (82, 84) est adapté pour induire un retrait de ladite machine de mesure de coordonnées (50) selon un mouvement rotatif.

9. Appareil de mesure d'une pièce selon l'une quelconque des revendications 5 à 8, dans lequel ladite machine d'usinage (20) et ladite machine de mesure de coordonnées (50) sont adaptés pour échanger mutuellement un signal autorisant la mesure et un signal d'achèvement de la mesure, tous deux étant liés au déplacement de ladite pièce (10) par ledit changeur (26).

10. Appareil de mesure d'une pièce selon la revendication 9, dans lequel ladite machine de mesure de coordonnées (50) quitte une position de retrait après avoir reçu un signal informant de l'achèvement d'un mouvement de changement, provenant de ladite machine d'usinage (20), et ledit changeur (26) commence à déplacer ladite pièce (10) après avoir reçu un signal informant de l'achèvement du retrait de la machine de mesure de coordonnées.

11. Appareil de mesure d'une pièce selon l'une quelconque des revendications 5 à 10, comprenant en outre un moyen de rotation (24) pour faire tourner la pièce (10) placée dans une position de mesure.
